(19) Europäisches Patentamt
European Patent Office
Office européen des brevets

(11) **EP 2 466 087 B1**

(12) **FASCICULE DE BREVET EUROPEEN**

(45) Date de publication et mention
de la délivrance du brevet:
**30.03.2016   Bulletin 2016/13**

(51) Int Cl.:
*F01N 11/00* $^{(2006.01)}$        *F01N 3/20* $^{(2006.01)}$

(21) Numéro de dépôt: **11189862.3**

(22) Date de dépôt: **21.11.2011**

(54) **Procédé de diagnostic d'un système de réduction catalytique sélective pour un véhicule et véhicule correspondant**

Diagnoseverfahren eines SCR-Systems für ein Kraftfahrzeug, sowie entsprechendes Kraftfahrzeug

Diagnostic procedure of a SCR system for a vehicle and corresponding vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2010   FR 1060455**

(43) Date de publication de la demande:
**20.06.2012   Bulletin 2012/25**

(73) Titulaire: **Peugeot Citroën Automobiles SA
78140 Vélizy Villacoublay (FR)**

(72) Inventeurs:
• **Leonardon, Mathilde**
  **75015 Paris (FR)**
• **Chaillou, Christophe**
  **78180 Montigny Le Bretonneux (FR)**
• **Georgiadis, Evangelos**
  **75013 Paris (FR)**
• **Vandevelde, Bruno**
  **92400 Courbevoie (FR)**
• **Bizet, Charles**
  **75015 Paris (FR)**

(56) Documents cités:
**EP-A1- 2 108 793     EP-A2- 2 180 157**

# Description

L'invention se rapporte à un procédé de diagnostic d'un système de réduction catalytique sélective pour un véhicule. L'invention concerne également un véhicule comprenant une unité de commande apte à mettre en oeuvre le procédé selon l'invention.

Dans un contexte de dépollution des gaz d'échappement d'un moteur diesel, les moteurs diesel sont équipés de systèmes de post-traitement des gaz d'échappement.

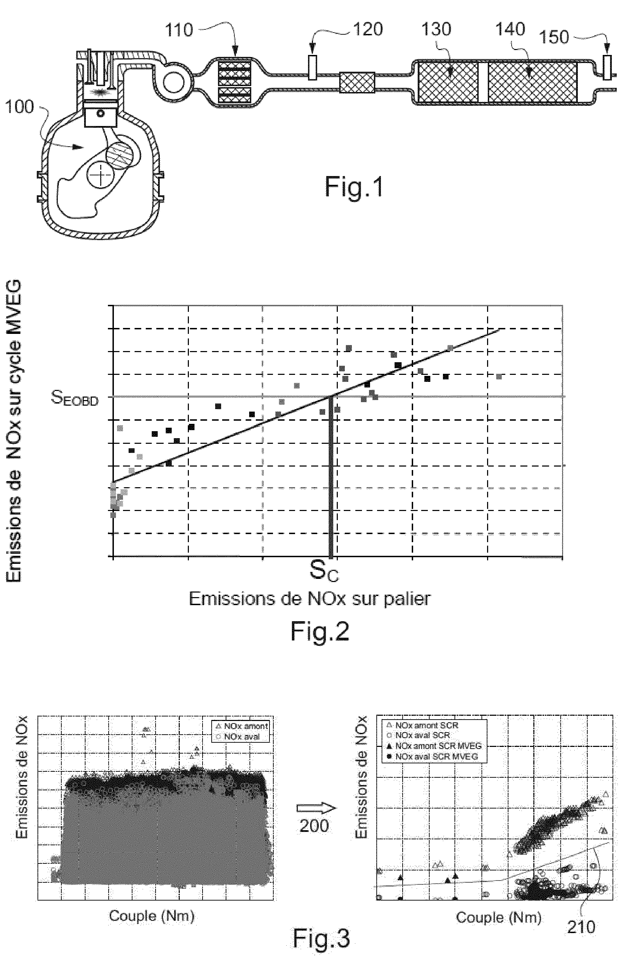

La figure 1 présente un exemple de moteur 100 ayant un système de post-traitement des gaz dans sa ligne d'échappement. Typiquement, un système de post-traitement des gaz d'échappement comprend un catalyseur d'oxydation 110, un système de réduction catalytique sélective 130, et un filtre à particules 140.

Le catalyseur d'oxydation 110 ou DOC (pour « Diesel Oxydation Catalyst » en anglais) assure le traitement des hydrocarbures (HC) et du monoxyde de carbone (CO).

Le système de réduction catalytique sélective 130 ou SCR (pour « Selective Catalytic Réduction » en anglais) assure le traitement des oxydes d'azote (NO et $NO_2$, notés $NO_x$ dans ce qui suit) contenus dans les gaz d'échappement et permet de réduire les $NO_x$ grâce à l'injection d'un réducteur et à un pain catalytique. Le réducteur est injecté dans la ligne d'échappement des gaz par l'intermédiaire d'un injecteur 120. Classiquement le réducteur est de l'ammoniac ($NH_3$). L'injection de l'ammoniac peut être réalisée par l'intermédiaire d'une autre espèce chimique telle que l'urée, ou l'Adblue (marque déposée) qui est composé d'urée diluée à 30% dans de l'eau.

Le filtre à particule 140 ou FAP assure le traitement des particules contenues dans les gaz d'échappement, en retenant ces mêmes particules. Ces particules sont des suies par exemple.

Lors d'un dysfonctionnement du système de réduction catalytique, les émissions d'oxyde d'azote augmentent. Une telle augmentation des émissions de $NO_x$ peut entraîner le dépassement d'un seuil d'émission réglementaire, tel qu'un seuil de diagnostic embarqué ou OBD (pour « On Board Diagnosis » en anglais). Dans ce cas, la réglementation impose que le défaut de fonctionnement du système de réduction catalytique soit détecté par l'intermédiaire d'un diagnostic du système de réduction catalytique.

Le document DE10135759 propose un système de contrôle de performance d'un catalyseur de monoxyde de carbone. Ce système comprend des capteurs de températures et de concentration en amont et en aval du catalyseur. La température et les concentrations sont ensuite comparées aux normes requises par le diagnostic OBD.

Le document DE60113147 propose un système de régulation d'injection de réducteur externe dans les catalyseurs de NOx, afin de garantir une utilisation de ceux-ci dans les meilleures conditions.

Le document DE69901358 propose un diagnostic de détérioration d'un catalyseur de NOx pour un moteur thermique. Le principe est de mesurer un nombre de fois donné sur une période donnée la concentration de NOx en aval du catalyseur, et de comparer la valeur moyenne de ces mesures de concentration à une valeur prédéfinie. Cependant le document ne précise pas comment la valeur prédéfinie est obtenue. Les documents EP 2 108 793 et EP 2 180 157 proposent eux aussi un procédé de diagnostic de défaillance du système de réduction des NOx, en utilisant respectivement la mesure de la quantité de NOx à l'amont et à l'aval du catalyseur, et en prenant en compte la quantité d'ammoniac injectée sur la ligne d'échappement en amont du catalyseur.

Il existe un besoin pour un procédé de diagnostic d'un système de réduction catalytique qui soit fiable.

Pour cela, l'invention propose un procédé de diagnostic d'un système de réduction catalytique sélective ayant un pain de réduction catalytique pour un véhicule comprenant un moteur connecté à une ligne d'échappement, le procédé comprenant

- la mesure des émissions de NOx dans la ligne d'échappement,
- la comparaison des émissions de NOx à une valeur seuil,

caractérisé en ce que le procédé comprend en outre, la détermination de conditions favorables à l'établissement d'un diagnostic et, le cas échéant, l'établissement d'un diagnostic de fonctionnement du système de réduction catalytique sélective en fonction de la comparaison.

Selon une variante, le procédé comprend en outre l'émission d'un signal d'avertissement si le diagnostic montre que le système de réduction catalytique sélective est défaillant.

Selon une variante, le procédé comprend en outre l'émission d'un signal d'avertissement si dans une ou plusieurs réitérations des étapes, le diagnostic montre que le système de réduction catalytique sélective est défaillant.

Selon une variante, une condition favorable à l'établissement du diagnostic consiste en la détection d'un couple moteur dans une plage de variation prédéterminée, la plage de variation du couple du moteur étant de préférence de plus ou moins 30 N.m par rapport au couple moteur.

Selon une variante, une condition favorable à l'établissement du diagnostic consiste en la détection d'une température dans la ligne d'échappement du pain de réduction catalytique comprise dans une plage de température prédéterminée, la plage de température prédéterminée étant de préférence de 200°C à 400°C.

Selon une variante, une condition favorable à l'établissement du diagnostic consiste en la détection d'une quantité de réducteur présente dans le pain de réduction catalytique comprise dans une plage de quantité prédéterminée, la plage de quantité de réducteur prédéterminée dans le pain étant de préférence de 0,1 g.l$^{-1}$ à 1 g.l$^{-1}$.

Selon une variante, une condition favorable à l'établissement du diagnostic consiste en la détection d'une efficacité de conversion de NOx optimale.

Selon une variante, la comparaison des émissions de NOx à une valeur seuil consiste en la comparaison d'une quantité de NOx émise en aval du pain de réduction catalytique à une valeur seuil.

Selon une variante, la comparaison des émissions de NOx à une valeur seuil consiste en la comparaison d'un taux de conversion de NOx entre l'amont et l'aval du pain de réduction catalytique à une valeur seuil.

L'invention concerne aussi un véhicule comprenant un moteur, une ligne d'échappement et un système de réduction catalytique sélective ayant un pain de réduction catalytique, le véhicule comprenant une unité de commande apte à mettre en oeuvre le procédé tel que décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, décrite précédemment, un exemple de moteur ayant un système de post-traitement des gaz dans sa ligne d'échappement ;
- figure 2, un graphe présentant les émissions de NO$_x$ sur un cycle MVEG en fonction des émissions de NO$_x$ pour un couple de moteur lors d'un roulage du véhicule ;
- figure 3, un schéma illustrant un mode de réalisation du procédé selon l'invention.

Le procédé de diagnostic selon l'invention sera mieux compris en faisant référence à la figure 1 déjà décrite.

Une information de défaut de fonctionnement d'un système de réduction catalytique doit être remontée à un utilisateur d'un véhicule lors d'un dysfonctionnement du système SCR. Ceci est en particulier le cas lorsque les émissions de NOx dépassent un seuil de diagnostic embarqué ou seuil OBD (pour « On Board Diagnosis » en anglais).

Pour cela, le procédé de diagnostic selon l'invention comprend la mise en place d'un diagnostic embarqué (ou diagnostic OBD) basé sur la mesure des NOx en amont et/ou en aval du système de réduction catalytique. Le diagnostic est réalisé sur des zones stabilisées du couple du moteur et dans des conditions favorables à la réalisation du diagnostic.

Le procédé selon l'invention permet un diagnostic fiable et efficace d'un système de réduction catalytique sélective d'un véhicule. Le véhicule comprend un moteur 100 connecté à une ligne d'échappement. Le système de réduction catalytique 130 est compris dans la ligne d'échappement. Le système de réduction catalytique 130 comprend un pain catalytique dans lequel a lieu la réaction chimique des NOx et du réducteur.

Le procédé comprend la mesure des émissions de NOx dans la ligne d'échappement. Par exemple, les NOx sont mesurés en amont et/ou en aval du système de réduction catalytique 130. Les NOx en aval du système SCR 130 sont par exemple mesurés à la canule, c'est-à-dire en sortie de la ligne d'échappement, avec un capteur 150.

Le procédé comprend ensuite la comparaison des émissions de NOx à une valeur seuil.

Dans un mode de réalisation, la comparaison des émissions de NOx consiste à comparer une quantité de NOx émise en aval du pain catalyseur avec une valeur seuil.

Dans un autre mode de réalisation, la comparaison des émissions de NOx consiste à comparer un taux de conversion E de NOx entre l'amont et l'aval du pain catalytique avec une valeur seuil. Le taux de conversion E est donné par l'expression suivante :

$$E = \frac{NOx_{amont} - NOx_{aval}}{NOx_{amont}} \; ,$$

où NOx$_{amont}$ est le niveau des émissions de NOx en amont du pain catalytique, et NOx$_{aval}$ est le niveau des émissions de NOx en aval du pain catalytique.

On procède ensuite à la détermination de conditions favorables à l'établissement d'un diagnostic. Le diagnostic du système de réduction catalytique 130 n'est lancé que dans des conditions favorables à sa réalisation, afin d'augmenter sa fiabilité. Ainsi, les mesures des émissions de NOx sont retenues aux fins du diagnostic si les conditions de fonctionnement du véhicule et/ou du système de réduction catalytique 130 le permettent. Autrement dit, les conditions favorables définissent des conditions de filtrage des mesures des émissions de NOx permettant d'obtenir un diagnostic fiable.

Par exemple, le diagnostic du système de réduction catalytique 130 est réalisé lorsque l'efficacité de conversion des NOx est optimale. Ceci est en particulier le cas lorsqu'une quantité prédéterminée de réducteur est injectée. La quantité prédéterminée de réducteur est fonction de la quantité de NOx à traiter en amont du système de réduction catalytique 130. Par exemple, la quantité prédéterminée de réducteur injectée permet de traiter entre 70% et 100% des NOx en amont du système de réduction catalytique 130.

Par exemple, le diagnostic du système de réduction catalytique 130 est réalisé lorsque la température du système de réduction catalytique 130 est comprise dans une plage spécifiée qui assure une efficacité importante de la conversion des NOx. Autrement dit, le diagnostic du système de réduction catalytique est établi lorsque la température dans la ligne d'échappement du pain catalytique est comprise dans une plage prédéterminée. Par exemple, la plage de température prédéterminée est de 200°C à 400°C.

Par exemple, le diagnostic du système de réduction catalytique 130 est réalisé lorsque le chargement en réducteur dans le pain catalytique est compris dans une plage spécifiée qui assure une efficacité importante de la conversion des NOx. Le chargement en réducteur désigne la quantité de réducteur dans le pain catalytique. Autrement dit, le diagnostic du système de réduction catalytique est établi lorsque la quantité de réducteur présente dans le pain catalytique est comprise dans une plage de prédéterminée. Par exemple la plage de quantité prédéterminée est de 0,1 g.l⁻¹ à 1 g.l⁻¹.

Par exemple, le diagnostic du système de réduction catalytique 130 est réalisé lorsque le couple du moteur a une valeur stabilisée. Autrement dit, le diagnostic du système de réduction catalytique 130 est établi lorsque le couple du moteur est compris dans une plage de variation prédéterminée. Par exemple, la plage de variation du couple du moteur est de plus ou moins 30 N.m par rapport à la valeur du couple.

Le procédé peut prendre en compte l'ensemble de ces conditions de fonctionnement du véhicule et/ou du système de réduction catalytique 130 ou seulement une partie de ces conditions.

Lorsqu'au moins l'une des conditions est réalisée, le diagnostic peut être lancé. Lorsque les émissions de NOx sont supérieures à la valeur seuil, Le diagnostic indique que le système de réduction catalytique 130 est défaillant. Lorsque les émissions de NOx sont inférieures à la valeur seuil, Le diagnostic indique que le système de réduction catalytique 130 fonctionne normalement.

Dans un mode de réalisation, le procédé comprend en outre l'émission d'un signal d'avertissement vers un utilisateur, si le diagnostic conclu à une défaillance du système de réduction catalytique 130.

Dans un autre mode de réalisation, le diagnostic est réalisé plusieurs fois avant d'être confirmé afin d'augmenter la robustesse du diagnostic. Autrement dit, les étapes de mesure, de comparaison et de diagnostic sont réitérées une ou plusieurs fois. Dans ce mode de réalisation, le procédé comprend en outre l'émission d'un signal d'avertissement si dans une ou plusieurs réitérations des étapes, le diagnostic conclut à une défaillance du système de réduction catalytique 130. Par exemple, les étapes de mesure, de comparaison et de diagnostic sont répétées 10 fois. Un signal d'avertissement est émis si dans 8 réitérations des étapes, le diagnostic conclut à une défaillance du système de réduction catalytique 130.

Le réducteur est par exemple de l'ammoniaque. Dans un autre exemple, le réducteur est un précurseur de l'ammoniaque, tel que l'urée ou l'Adblue (marque déposée).

Sur la figure 2, les émissions de NOx mesurées sur un cycle MVEG (pour « Motor Vehicle Emissions Group » en anglais) sont tracées en fonction des émissions de NOx mesurées sur un palier de couple. Par l'expression « palier de couple » on entend une valeur stabilisée de couple du moteur 100 lors d'un roulage du véhicule. Les points sont acquis pour différents essais correspondant à des systèmes SCR 130 plus ou moins défaillants. Chaque point correspond à un essai. Les abscisses sont obtenues en mesurant les émissions de NOx sur une partie du roulage correspondant à un couple stabilisé (c'est-à-dire un palier de couple). Les ordonnées sont obtenues en mesurant les émissions de NOx sur un cycle MVEG. Le seuil EOBD (pour « European On Board Diagnosis » en anglais) pour un véhicule en utilisation est représenté par la droite d'ordonnée $S_{EOBD}$.

La mesure des NOx sur palier (c'est-à-dire pour une valeur stabilisée du couple) permet de remonter directement au positionnement du système SCR 130 par rapport au seuil OBD $S_{EOBD}$. Le seuil calibré Sc est un seuil d'émission de NOx lors du roulage du véhicule correspondant au seuil EOBD $S_{EOBD}$. Un défaut du système de réduction catalytique 130 est levé lorsque les émissions de NOx sont supérieures au seuil calibré Sc. Autrement dit, le diagnostic indique que le système de réduction catalytique 130 est défaillant lorsque les émissions de NOx sont supérieures au seuil calibré Sc.

Le procédé selon l'invention sera mieux compris en faisant référence à la figure 3. Les graphiques en figure 3 représentent les émissions de NOx en amont et en aval du pain catalytique. Les points sont obtenus sur un roulage de véhicule en fonction du couple du moteur. Le procédé de diagnostic est appliqué sur un système de réduction catalytique 130 non défaillant.

Le graphe à gauche présente les émissions de NOx en amont et en aval du pain catalytique avant la sélection (ou filtrage 200) des mesures respectant les conditions favorables de diagnostic.

Le graphe à droite présente les émissions de NOx en amont et en aval du pain catalytique après un filtrage 200, c'est-à-dire après la sélection des mesures respectant les conditions favorables au diagnostic. Le graphe représente les mesures acquises sur un roulage du véhicule. Le graphe représente également les mesures acquises sur un cycle MVEG. La courbe 210 représente le seuil calibré Sc en fonction du couple du moteur. Des mesures d'émissions de NOx en aval du pain catalytique situées sous le seuil calibré représenté par la courbe 210 indiquent que le système de réduction catalytique est non défaillant.

Les graphes en figure 3 illustrent le gain d'efficacité obtenu grâce au filtrage 200 du lancement du diagnostic sur des stabilisés (ou valeurs stables du couple du moteur) et dans les conditions favorables énoncées ci-dessus. Une meilleure séparation est observée entre les mesures de quantité de NOx en amont du SCR 130, que l'on peut assimiler à un système SCR 130 complètement défaillant, et les mesures de quantité de NOx en aval du SCR 130.

L'invention concerne également un véhicule comprenant un moteur 100, une ligne d'échappement et un système de réduction catalytique sélective 130 ayant un pain de réduction catalytique. Le véhicule comprend une unité de commande apte à mettre en oeuvre le procédé selon l'invention.

L'invention n'est pas limitée aux exemples présentés ci-dessus. Ainsi, le procédé selon l'invention n'est pas limité à la mesure et la comparaison d'une quantité de NOx émise en aval du système SCR 130. Le procédé peut être mis en oeuvre avec la mesure et la comparaison de l'efficacité de conversion de NOx (ou taux de conversion de NOx). Le procédé peut en outre comprendre d'autres conditions de filtrages que celles décrites dans les exemples.

**Revendications**

1. Procédé de diagnostic d'un système de réduction catalytique sélective (130) ayant un pain de réduction catalytique pour un véhicule comprenant un moteur (100) connecté à une ligne d'échappement, le procédé comprenant

   - la mesure des émissions de NOx dans la ligne d'échappement,
   - la comparaison des émissions de NOx consistant en la comparaison d'un taux de conversion de NOx entre l'amont et l'aval du pain de réduction catalytique à une valeur seuil calibrée,

   **caractérisé en ce que** le procédé comprend en outre, la détermination de conditions favorables à l'établissement d'un diagnostic consistant en :

   - la détection d'un couple moteur dans une plage de variation prédéterminée,
   - la détection d'une température dans la ligne d'échappement du pain de réduction catalytique comprise dans une plage de température prédéterminée, la plage de température prédéterminée étant de 200°C à 400°C,
   - la détection d'une quantité de réducteur présente dans le pain de réduction catalytique comprise dans une plage de quantité prédéterminée, la plage de quantité de réducteur prédéterminée dans le pain étant de 0,1 g.l$^{-1}$ à 1 g.l$^{-1}$, et, le cas échéant, l'établissement d'un diagnostic de fonctionnement du système de réduction catalytique sélective en fonction de la comparaison.

2. Le procédé selon la revendication 1, **caractérisé en ce que** le procédé comprend en outre l'émission d'un signal d'avertissement si le diagnostic montre que le système de réduction catalytique sélective est défaillant.

3. Le procédé selon la revendication 1, **caractérisé en ce que** le procédé comprend en outre l'émission d'un signal d'avertissement si dans une ou plusieurs réitérations des étapes, le diagnostic montre que le système de réduction catalytique sélective est défaillant.

4. Le procédé selon l'une des revendications 1 à 3, **caractérisé en ce que** la plage de variation du couple du moteur prédéterminée est de plus ou moins 30 N.m par rapport au couple moteur.

5. Le procédé selon l'une des revendications 1 à 4, **caractérisé en ce qu'**une condition favorable à l'établissement du diagnostic consiste en la détection d'une efficacité de conversion de NOx optimale.

6. Véhicule comprenant un moteur, une ligne d'échappement et un système de réduction catalytique sélective (130) ayant un pain de réduction catalytique, **caractérisé en ce qu'**il comprend une unité de commande apte à mettre en oeuvre le procédé selon l'une des revendications 1 à 5.

**Patentansprüche**

1. Diagnoseverfahren eines Systems zur selektiven katalytischen Reduktion (130), das ein katalytisches Reduktionselement für ein Fahrzeug hat, das einen Motor (100) umfasst, der mit einem Auspuffstrang verbunden ist, wobei das Verfahren Folgendes umfasst

   - die Messung der NOx-Emissionen in dem Auspuffstrang,
   - den Vergleich der NOx-Emissionen, der in dem Vergleich einer NOx-Umwandlungsrate zwischen stromaufwärts und stromabwärts des katalytischen Reduktionselements mit einem kalibrierten Schwellenwert besteht,

   **dadurch gekennzeichnet, dass** das Verfahren außerdem das Bestimmen von Bedingungen, die für das Erstellen einer Diagnose günstig sind, umfasst, bestehend aus:

   - dem Erfassen eines Motordrehmoments in einem vorbestimmten Variationsbereich,
   - dem Erfassen einer Temperatur in dem Auspuffstrang des katalytischen Reduktionselements, die in einem vorbestimmten Temperaturbereich liegt, wobei der vorbestimmte Temperaturbereich 200 °C bis 400 °C beträgt,
   - dem Erfassen einer Reduktormenge, die in dem katalytischen Reduktionselement gegenwärtig ist, die in einem vorbestimmten Mengenbereich liegt, wobei der Reduktormengenbereich in dem Reduktionselement 0,1 g.l$^{-1}$ bis 1 g.l$^{-1}$ beträgt,

und, gegebenenfalls, dem Erstellen einer Betriebsdiagnose des selektiven katalytischen Reduktionssystems in Abhängigkeit von dem Vergleich.

2. Verfahren nach Anspruch 1, **dadurch gekennzeichnet, dass** das Verfahren außerdem das Senden eines Warnsignals umfasst, falls die Diagnose zeigt, dass das selektive katalytische Reduktionssystem versagt.

3. Verfahren nach Anspruch 1, **dadurch gekennzeichnet, dass** das Verfahren außerdem das Senden eines Warnsignals umfasst, falls die Diagnose bei einer oder mehreren Reiterationen der Schritte zeigt, dass das selektive katalytische Reduktionssystem versagt.

4. Verfahren nach einem der Ansprüche 1 bis 3, **dadurch gekennzeichnet, dass** der vorbestimmte Variationsbereich des Motordrehmoments im Vergleich zu dem Motordrehmoment plus oder minus 30 N.m beträgt.

5. Verfahren nach einem der Ansprüche 1 bis 4, **dadurch gekennzeichnet, dass** eine günstige Bedingung zum Erstellen der Diagnose in dem Erfassen einer optimalen NOx-Umwandlungseffizienz besteht.

6. Fahrzeug, das einen Motor, einen Auspuffstrang und ein selektives katalytisches Reduktionssystem (130) umfasst, das ein katalytisches Reduktionselement hat, **dadurch gekennzeichnet, dass** es eine Steuereinheit umfasst, die geeignet ist, das Verfahren nach einem der Ansprüche 1 bis 5 umzusetzen.

## Claims

1. A diagnostic procedure of a selective catalytic reduction system (130) having a catalytic reduction bed for a vehicle including an engine (100) connected to an exhaust line, the procedure including

    - the measurement of the emissions of NOx in the exhaust line,
    - the comparison of the emissions of NOx consisting in the comparison of a conversion rate of NOx between upstream and downstream of the catalytic reduction bed to a calibrated threshold value,

    **characterized in that** the procedure further includes the determining of favourable conditions for the establishing of a diagnostic consisting in:

    - the detection of an engine torque in a predetermined variation range,

    - the detection of a temperature in the exhaust line of the catalytic reduction bed comprised in a predetermined temperature range, the predetermined temperature range being from 200°C to 400°C,
    - the detection of a quantity of reducer present in the catalytic reduction bed comprised in a predetermined quantity range, the predetermined quantity range of reducer in the bed being from $0.1 \text{ g.l}^{-1}$ to $1 \text{ g.l}^{-1}$,

    and, if applicable, the establishing of a diagnostic of the functioning of the selective catalytic reduction system as a function of the comparison.

2. The procedure according to Claim 1, **characterized in that** the procedure further includes the emission of a warning signal if the diagnostic shows that the selective catalytic reduction system is faulty.

3. The procedure according to Claim 1, **characterized in that** the procedure further includes the emission of a warning signal if in one or several reiterations of the steps, the diagnostic shows that the selective catalytic reduction system is faulty.

4. The procedure according to one of Claims 1 to 3, **characterized in that** the predetermined range of variation of the torque of the engine is more or less 30 N.m with respect to the engine torque.

5. The procedure according to one of Claims 1 to 4, **characterized in that** a favourable condition for the establishing of the diagnostic consists in the detection of an optimum conversion efficiency of NOx.

6. A vehicle including an engine, an exhaust line and a selective catalytic reduction system (130) having a catalytic reduction bed, **characterized in that** it includes a control unit able to implement the procedure according to one of Claims 1 to 5.

Fig.1

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10135759
- DE 60113147
- DE 69901358
- EP 2108793 A
- EP 2180157 A